# EUROPEAN PATENT APPLICATION

(11) **EP 4 813 686 A1**
(43) Date of publication of application: **30.09.2026**
(21) Application number: 25166095.7
(22) Date of filing: 25.03.2025
(51) Int. Cl.: B60K 1/04

(54) **BATTERY SUSPENSION ARRANGEMENT WITH SUPPORT ELEMENT FOR ENABLING REMOVAL OF TRACTION BATTERY**

(71) Applicant: Volvo Truck Corporation, 405 08 Göteborg (SE)
(72) Inventor: LANDVIK, Sondre, 417 61 GÖTEBORG (SE)
(74) Representative: Kransell & Wennborg KB

(57) **Abstract**

The disclosure relates to a battery suspension arrangement comprising a pair of support elements, of which each is configured to be connected to a traction battery and detachably fastened to a battery suspension portion of a respective beam to enable removable of the traction battery.

## Description

### TECHNICAL FIELD

The disclosure relates generally to battery suspension arrangements for connecting traction batteries to a frame of vehicle. In particular aspects, the disclosure relates to a battery suspension arrangement with support element for enabling removal of traction battery. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

A challenge in electric vehicle development is the integration of energy storage systems, which should balance factors such as weight distribution, durability, and vehicle performance. Traction batteries are typically mounted within the vehicle structure to ensure safety and efficiency while considering factors like manufacturability and serviceability. For heavy-duty vehicles, these requirements become even more critical due to higher power demands, larger battery sizes, and the need for robust structural integration.

### SUMMARY

According to a first aspect of the disclosure, there is provided a battery suspension arrangement for a traction battery arrangement of a vehicle, the battery suspension arrangement comprising a pair of beams arranged at a distance from each other, each of the beams extending from a first end to a second end, the pair of beams each comprising a first battery suspension portion configured to suspend a first traction battery, and a second battery suspension portion configured to suspend a second traction battery, the second battery suspension portion being positioned vertically lower than the first battery suspension portion, a pair of frame brackets configured to connect the pair of beams to a frame of the vehicle, wherein each one of the frame brackets is connected to a respective one of the pair of beams at a frame connecting position arranged between the first and second ends, wherein the first battery suspension portion is arranged between the first end and the frame connecting position, and the second battery suspension portion is arranged between the second end and the frame connecting position, and a pair of support elements, each one of the support elements comprising a first portion to which the second traction battery is configured to be connected, and a second portion detachably fastened to the second battery suspension portion of the respective beam to enable removal of the second traction battery. The first aspect of the disclosure may seek to provide a battery suspension arrangement that enables efficient mounting and removal of a second traction battery while ensuring structural stability and serviceability. Conventional designs may present challenges in attaching and detaching a traction battery located below the vehicle frame, particularly in production and during maintenance. By providing a pair of support elements arranged between the second end and the frame connecting position, a traction battery can be connected below the vehicle frame, wherein the pair of support elements provide a detachable mounting solution that may improve ergonomic installation and manufacturability while reducing service time. A technical benefit may include enabling efficient mounting and removal of a second traction battery by providing a detachable support structure, which may reduce assembly complexity and service time. Another technical benefit may include improving weight distribution by allowing the second traction battery to be positioned below the vehicle frame, which can contribute to vehicle stability. Additionally, the arrangement of the support elements may allow for a more compact battery installation, which can help optimize space utilization within the vehicle chassis.

Optionally in some examples, including in at least one preferred example, the battery suspension arrangement further comprises a battery bracket configured to be connected to the second traction battery, wherein the battery bracket is connected to the first portion of the support element. A technical benefit may include that the battery bracket can provide a dedicated interface between the second traction battery and the support element, which may improve load distribution. Another technical benefit may include that the battery bracket can allow for a standardized attachment point, which can simplify battery installation and replacement.

Optionally in some examples, including in at least one preferred example, the battery bracket comprises an elongated portion, and the first portion of the support element comprises an aperture, wherein the elongated portion is positioned within the aperture. A technical benefit may include that the elongated portion and aperture can provide a simple and efficient connection between the battery bracket and the support element. The elongated portion and the aperture may improve assembly efficiency. Another technical benefit may include that the positioning of the elongated portion within the aperture can allow for a secure yet detachable interface, which can simplify the manufacturing process as well as a maintenance process. Additionally, the elongated portion in combination with the aperture may allow for slight positional variations during installation, reducing the need for highly precise alignment during installation.

Optionally in some examples, including in at least one preferred example, a cross-sectional dimension of the elongated portion is smaller than a cross-sectional dimension of the aperture, thereby allowing relative movement between the battery bracket and the support element. A technical benefit may include that the difference in cross-sectional dimensions between the elongated portion and the aperture can allow relative movement between the battery bracket and the support element. Such relative movement can help compensate for frame twisting and other dynamic forces during vehicle operation. Another technical benefit may include that the difference in cross-sectional dimensions can reduce stress concentrations on the battery mounting interface, which may improve the durability of both the battery bracket and the support element. Additionally, the ability for relative movement may simplify the assembly process by allowing for minor misalignments during installation.

Optionally in some examples, including in at least one preferred example, the battery suspension arrangement further comprises an suspension element arranged between the battery bracket and the first portion of the support element. A technical benefit may include that the suspension element can absorb vibrations and dynamic forces between the battery bracket and the support element, which may reduce mechanical stress on the battery pack. Another technical benefit may include that the suspension element can compensate for minor misalignments and movement due to frame twisting, which may contribute to improved durability of the battery suspension arrangement. The suspension element may be an elastic suspension element.

Optionally in some examples, including in at least one preferred example, the battery bracket is a first battery bracket, the battery suspension arrangement further comprising a second battery bracket arranged at a distance from the first battery bracket toward the second end of the beams, the second battery bracket being configured to be connected to the second traction battery, wherein the second battery bracket is connected to an additional first portion of the support element. A technical benefit may include that the second battery bracket can provide an additional support point for suspending the second traction battery, which may improve e.g. load distribution. Another technical benefit may include that stress concentrations on individual mounting points can be reduced by arranging the second battery bracket at a distance from the first battery bracket, which in turn can contribute to increased durability of the battery suspension arrangement. Additionally, the use of two battery brackets may improve balance and positioning of the second traction battery, which can support efficient weight distribution within the frame of the vehicle.

Optionally in some examples, including in at least one preferred example, the battery suspension arrangement further comprises a bar element extending between and connected to the first and second battery brackets. A technical benefit may include that the bar element can provide a structural link between the first and second battery brackets, which may improve the overall rigidity of the battery suspension arrangement. Another technical benefit may include that the bar element can help distribute forces between the battery brackets, which may reduce localized stress and contribute to increased durability.

Optionally in some examples, including in at least one preferred example, the battery suspension arrangement further comprises a pair of elastic damper elements arranged between the bar element and a respective one of the first and second battery brackets. A technical benefit may include that the pair of elastic damper elements can absorb vibrations and shocks transmitted between the bar element and the battery brackets, which may reduce mechanical stress on the battery suspension arrangement. Another technical benefit may include that the elastic damper elements can allow for relative movement between the bar element and the battery brackets, which may help compensate for dynamic forces such as frame twisting during vehicle operation.

Optionally in some examples, including in at least one preferred example, the battery suspension arrangement further comprises a plurality of releasable fasteners detachably fastening the second portion of the support element to the second battery suspension portion. A technical benefit may include that the plurality of releasable fasteners can provide a secure yet detachable connection between the support element and the second battery suspension portion. The detachable connection may simplify maintenance and replacement of the second traction battery. Another technical benefit may include that loads can be distributed more evenly across the connection points, which may reduce stress concentrations.

Optionally in some examples, including in at least one preferred example, the plurality of releasable fasteners comprise at least one screw or bolt. A technical benefit may include that using at least one screw or bolt as a releasable fastener can provide a reliable and robust connection between the support element and the second battery suspension portion.

Optionally in some examples, including in at least one preferred example, each of the pair of beams comprises a cut-out portion, the first portion of the support element being positioned to at least partly cover the cut-out portion. A technical benefit may include that the cut-out portion can allow the second traction battery to be pulled "through" the beam, which may simplify battery removal and replacement. Another technical benefit may include that positioning the first portion of the support element to at least partly cover the cut-out portion can help restore the strength of the beam, which may maintain the load-bearing capability of the battery suspension arrangement.

Optionally in some examples, including in at least one preferred example, each of the frame brackets comprises a reversed U-shape portion that at least partly enclose the respective beam. A technical benefit may include that the reversed U-shape portion of each frame bracket can provide a form-locking interface with the beam, which may improve the structural stability of the battery suspension arrangement. Another technical benefit may include that the reversed U-shape portion can help distribute frontal collision forces more effectively by reducing shear loads on the bolts. Additionally, the shape of the frame bracket may assist in guiding the beams into position during assembly, which can simplify production and improve alignment accuracy.

Optionally in some examples, including in at least one preferred example, the battery suspension arrangement further comprises a pair of additional battery brackets configured to be connected to the first traction battery, wherein the additional battery brackets are connected to the first battery suspension portion. A technical benefit may include that the pair of additional battery brackets can provide dedicated mounting points for the first traction battery, which first traction battery may preferably be arranged outside of the frame of the vehicle.

Optionally in some examples, including in at least one preferred example, each additional battery bracket comprises an additional elongated portion, and the first battery suspension portion comprises an additional aperture, the additional elongated portion is positioned within the additional aperture. A technical benefit may include that the additional elongated portion and the additional aperture can provide a simple and efficient connection between the additional battery bracket and the first battery suspension portion. Another technical benefit may include that the positioning of the additional elongated portion within the additional aperture can allow for a secure yet detachable interface, which may simplify the manufacturing process as well as a maintenance process.

Optionally in some examples, including in at least one preferred example, a cross-sectional dimension of the additional elongated portion is smaller than a cross-sectional dimension of the additional aperture, thereby allowing relative movement between the additional battery bracket and the first battery suspension portion. A technical benefit may include that the difference in cross-sectional dimensions between the additional elongated portion and the additional aperture can allow for relative movement between the additional battery bracket and the first battery suspension portion. Such relative movement can help accommodate frame twisting and other dynamic forces during vehicle operation. Another technical benefit may include that the difference in cross-sectional dimensions can reduce stress concentrations on the battery mounting interface, which may improve the durability of both the additional battery bracket and the first battery suspension portion.

Optionally in some examples, including in at least one preferred example, the battery suspension arrangement further comprises an additional bar element extending between and connected to the pair of additional battery brackets. A technical benefit may include that the additional bar element can provide a structural link between the pair of additional battery brackets, which may improve the overall rigidity of the battery suspension arrangement. Another technical benefit may include that the additional bar element can help distribute forces between the additional battery brackets, which may reduce localized stress and contribute to increased durability.

Optionally in some examples, including in at least one preferred example, the battery suspension arrangement further comprises a pair of additional elastic damper elements arranged between the additional bar element and a respective one of the pair of additional battery brackets. A technical benefit may include that the pair of additional elastic damper elements can absorb vibrations and shocks transmitted between the additional bar element and the additional battery brackets, which may reduce mechanical stress on the battery suspension arrangement. Another technical benefit may include that the additional elastic damper elements can allow for relative movement between the additional bar element and the additional battery brackets, which may help compensate for dynamic forces such as frame twisting during vehicle operation.

Optionally in some examples, including in at least one preferred example, at least one of the pair of beams has an I-shaped cross-section. A technical benefit may include that an I-shaped cross-section can provide a high strength-to-weight ratio, which may improve the structural performance of the battery suspension arrangement without adding excessive weight. Additionally, the shape of the I-beam may simplify the connection of components, such as the pair of support elements, by providing well-defined mounting surfaces.

According to a second aspect, there is provided a vehicle comprising the battery suspension arrangement according to any of the examples described above in relation to the first aspect.

Effects and features of the second aspect are largely analogous to those described above in relation to the first aspect.

According to a third aspect, there is provided a method of assembling a first and a second traction battery to a frame of a vehicle, the method comprising: connecting a pair of support elements to respective longitudinal ends of a second traction battery, attaching the pair of support elements to a respective one of a pair of beams, each beam extending from a first end to a second end, moving the pair of beams vertically and subsequently securing the beams to a respective one of a pair of frame brackets attached to the frame of the vehicle, thereby suspending the second traction battery from the frame of the vehicle, and connecting a first traction battery to the pair of beams on a side opposite to the frame brackets relative to the position of the second traction battery. The third aspect of the disclosure may seek to provide a method that enables an efficient and structured assembly process for mounting a first and a second traction battery to a vehicle frame. Conventional assembly methods may present challenges in securely positioning and suspending a battery below the vehicle frame while maintaining structural stability and serviceability. By defining a specific assembly process for attaching the support elements, positioning the beams, and securing the components, the disclosed method may improve assembly efficiency, reduce complexity, and ensure proper alignment of the traction batteries within the vehicle frame. A technical benefit may include that the method provides a structured and repeatable process for assembling traction batteries to a vehicle frame, which may improve manufacturing efficiency. Another technical benefit may include that the method defines a sequence for securing the second traction battery before the first traction battery, which may simplify handling and positioning during assembly. Additionally, the method may improve alignment accuracy by guiding the connection of the support elements, beams, and frame brackets in a controlled manner, which can reduce the risk of installation errors.

Further effects and features of the third aspect are largely analogous to those described above in relation to the first aspect.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example.
Fig. 2 is an exemplary illustration of an energy storage system comprising traction batteries suspended from a frame of the vehicle by a battery suspension arrangement according to an example.
Figs. 3 - 6 are detailed exemplary illustrations of the battery suspension arrangement according to examples.
Fig. 7 is an exemplary flow chart of a method of assembling a first and section traction battery to the frame of the vehicle according to an example.

### DETAILED DESCRIPTION

The detailed description set forth below provides information and examples of the disclosed technology with sufficient detail to enable those skilled in the art to practice the disclosure.

The disclosure described in the following aims at providing a battery suspension arrangement and method that enables efficient mounting and removal of a second traction battery while ensuring structural stability and serviceability. A technical benefit may include enabling efficient mounting and removal of a second traction battery by providing a detachable support structure, which may reduce assembly complexity and service time.

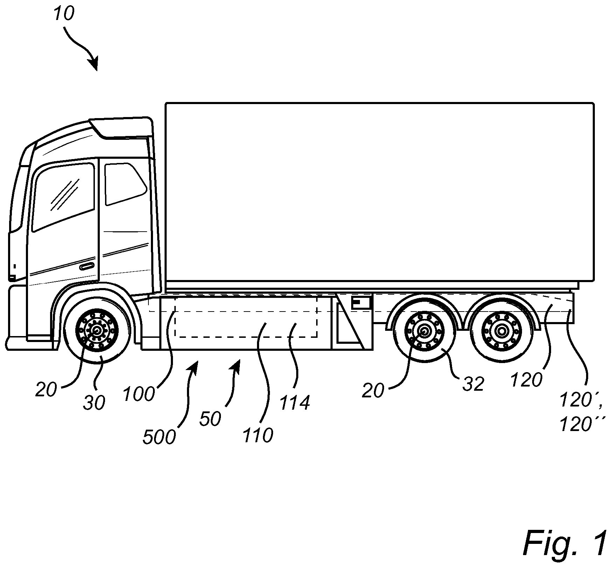

With reference to Fig. 1 an exemplary illustration of a vehicle 10 according to an example is depicted. The exemplified vehicle 10 is configured to be at least partly propelled by one or more electric traction motors 20. In Fig. 1, the electric traction motors 20 are exemplified as wheel hub motors connected to the pair of front wheels 30 as well as to the foremost pair of rear wheels 32. However, the vehicle 10 may alternatively comprise a single electric traction motor connected to the wheels via a conventional propulsion shaft (not shown). The at least one electric traction motor 20 is configured to apply propulsive power to the wheels of the vehicle during propulsion, and to generate electric power during braking.

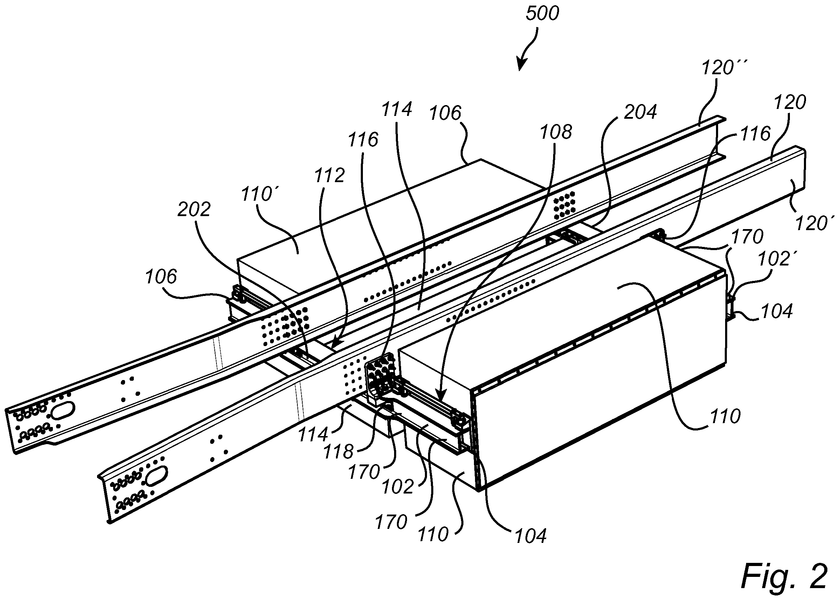

The vehicle further comprises a traction battery arrangement 50. The traction battery arrangement 50 forms part of an energy storage system 500. The traction battery arrangement comprises at least two traction batteries 110, 114 configured to feed electric power to the electric traction motor 20 during propulsion of the vehicle 10 and to receive electric power during braking. In the example depicted in Fig. 2, the traction battery arrangement comprises a first traction battery 110, a second traction battery 114 and an additional first traction battery 110'. The second traction battery 114 is arranged laterally between the first traction battery 110 and the additional first traction battery 110'. For simplifying for the skilled reader, the following will primarily describe the first 110 and second 114 traction batteries and features in relation to these two traction batteries.

In the following, when referring to a traction battery, it should be readily understood that this definition also includes a housing or module for traction battery cells, etc. Hence, a traction battery may comprise a battery housing accommodating a plurality of battery cells.

The traction batteries 110, 114 are suspended from the frame 120 of the vehicle 10 by means of a battery suspension arrangement 100. The frame 120 of the vehicle 10 preferably comprises a pair of longitudinally extending frame rails 120', 120", which are illustrated in further detail in e.g. Fig. 2. The pair of longitudinally extending frame rails 120', 120" preferably extends in a longitudinal direction of the vehicle 10. In order to describe the battery suspension arrangement 100 in further detail, reference is now made to Fig. 2.

Reference is now made to Fig. 2, which schematically illustrates a perspective view of an example of the battery suspension arrangement 100 mounted to the vehicle frame 120. As shown, the traction battery arrangement 50 comprises the above described first traction battery 110, the second traction battery 114, as well as an additional first traction battery 110'. The first traction battery 110 and the additional first traction battery 110' are arranged on laterally opposite sides of the second traction battery 114, preferably outside of the pair of longitudinally extending frame rails 120', 120". Hence, the second traction battery 114 is arranged laterally between the first traction battery 110 and the additional first traction battery 110'. Preferably, the second traction battery 114 is positioned between the longitudinally extending frame rails, in a location below the vehicle frame 120. For simplifying for the skilled reader, the following will primarily describe the first 110 and second traction batteries 114, and features in relation to these two traction batteries.

Further, the battery suspension arrangement 100 comprises a pair of beams 102, 102', which are arranged at a distance from each other in the longitudinal direction of the vehicle. At least one of the pair of beams 102, 102' has an I-shaped cross-section. Each of the beams 102, 102' extends laterally across the vehicle, from a first end 104 to a second end 106. The pair of beams each comprises a first battery suspension portion 108 and a second battery suspension portion 112. The first battery suspension portion 108 is located between the first end 104 and a frame connecting position 118 along each beam and is configured to suspend the first traction battery 110. The second battery suspension portion 112 is located between the second end 106 and the frame connecting position 118, and is configured to suspend the second traction battery 114. The second battery suspension portion 112 is positioned vertically lower than the first battery suspension portion 108, thereby enabling the second traction battery 114 to be suspended beneath the vehicle frame 120. The frame connecting position 118 is thus the position of each beam 102, 102' that connects to the frame 120.

The battery suspension arrangement 100 further comprises a pair of frame brackets 116. Each frame bracket 116 is configured to connect a respective beam 102, 102' to the vehicle frame 120 at the frame connecting position 118. In the illustrated example, each frame bracket is rigidly attached to a corresponding longitudinal frame rail 120', 120" of the vehicle. The frame bracket 116 may be secured to the frame 120 by e.g. bolts, screws, rivets, etc.

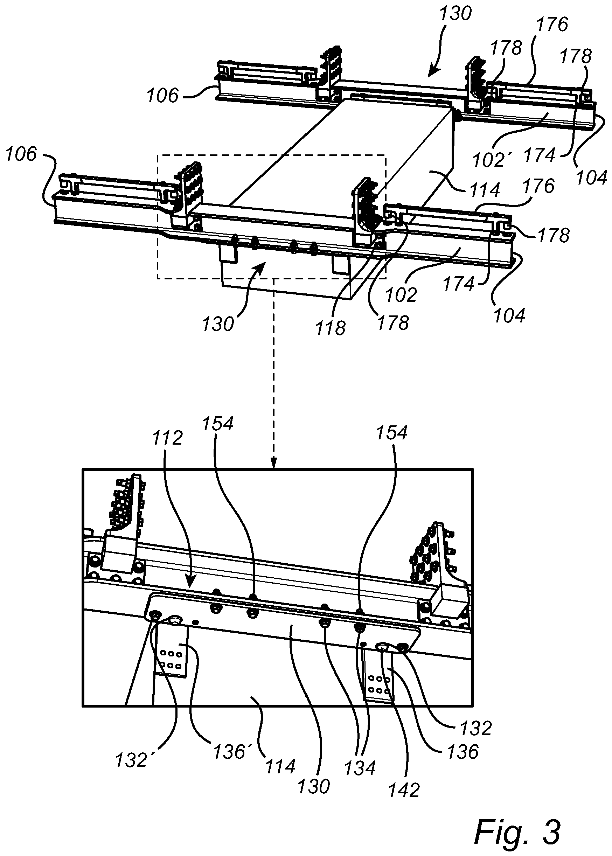

Moreover, the battery suspension arrangement 100 also comprises a pair of support elements 130. Each of the support elements 130 is connected to a respective longitudinal end 202, 204 of the second traction battery 114 and is mounted to the second battery suspension portion 112 of the respective beams 102, 102'. The support elements 130 are arranged as a structural interface between the second traction battery 114 and the beams 102, 102' for supporting the second traction battery 114 in a suspended position beneath the frame 120. The second traction battery 114 can hence rest on an upper surface of the support element 130. The structure and mounting interface of the support elements will be described in further detail below with reference to Figs. 3 - 6.

Reference is now made to Figs. 3 to 6, which illustrate different views of the exemplified battery suspension arrangement 100 described above. The views in Figs. 3 - 6 provide, amongst other, further detail regarding the structural interface between the second traction battery 114 and the pair of beams 102, 102', as well as additional features arranged in connection to the first traction battery 110.

As can be seen, each of the above described support elements 130 comprises a first portion 132 and a second portion 134. The first portion 132 is configured to interface with a battery bracket 136 that is connected to the respective longitudinal end 202, 204 of the second traction battery 114. The battery bracket 136 is connected to the second traction battery 114 by means of a suitable fastener element arranged through bracket openings 137 of the battery bracket 136. The battery bracket 136 may thus serve as an attachment interface between the second traction battery 114 and the support element 130. In the illustrated example, the battery bracket 136 is arranged as a separate structural component that is connectable to the second traction battery 114 and removably coupled to the first portion 132 of the support element 130.

In further detail, the battery bracket 136 comprises an elongated portion 140 that extends toward the support element 130. The elongated portion 140 can be a peg or a pin. The first portion 132 of the support element 130 on the other hand comprises an aperture 142, into which the elongated portion 140 is positioned. According to a preferred example, a cross-sectional dimension of the elongated portion 140 is smaller than the corresponding cross-sectional dimension of the aperture 142. This may allow for a relative movement between the battery bracket 136 and the support element 130. As described above, the second traction battery 114 may rest on an upper surface of the support element 130, i.e. the second traction battery 114 does not "hang" from the beam 102 which may provide redundancy in the unlikely event that the elongated portion 140 fails to function as desired.

Moreover, an suspension element 144 is arranged between the battery bracket 136 and the first portion 132 of the support element 130. The suspension element 144 will in the following be referred to as an elastic suspension element which may be made of rubber or another resilient material, and serves to dampen vibrations and reduce transmission of dynamic loads between the second traction battery 114 and the battery suspension arrangement 100.

In the illustrated example, the battery suspension arrangement 100 also comprises a second battery bracket 136'. The second battery bracket 136' is arranged at a distance from the first battery bracket 136 in a direction toward the second end 106 of the beams 102, 102'. The second battery bracket 136' is connected to an additional first portion 132' of the corresponding support element 130. Hence, the additional first portion 132' of the support element 130 is arranged at a distance from the first portion 132 in a direction toward the second end 106 of the beams 102, 102'. Together, the first and second battery brackets 136, 136' provide dual-point suspension support for the second traction battery 114.

Furthermore, the exemplified battery suspension arrangement 100 comprises a bar element 150. The bar element 150 extends between and is connected to the first and second battery brackets 136, 136'. A pair of elastic damper elements 152, 152' is arranged between the bar element 150 and the respective battery brackets 136, 136'. The damper elements are configured to absorb shocks and compensate for relative movement caused by dynamic loads during vehicle operation. The pair of elastic damper elements 152, 152'can also act as a bump stop to prevent the traction battery and the elongated portion 140 to slide too far up in a vertical direction so that the traction battery and the elongated portion do not fall off the assembly installation.

Further, the second portion 134 of each support element 130 is detachably fastened to the second battery suspension portion 112 of the corresponding beam 102, 102' using a plurality of releasable fasteners 154. The releasable fasteners 154 may include screws, bolts, or equivalent fastening elements that allow for disassembly and reattachment of the second traction battery 114 when required, for instance during servicing or replacement.

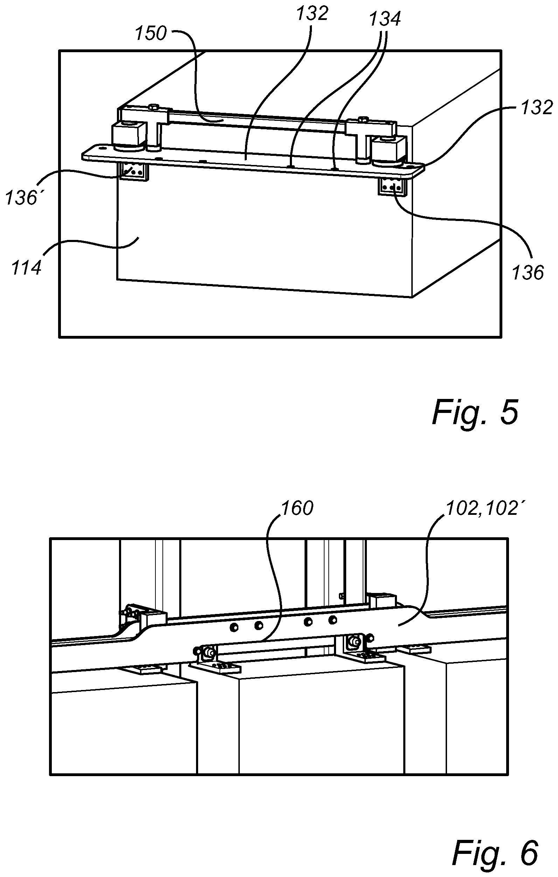

Also, and as detailed in Fig. 6, which is a view from below, each beam 102, 102' includes a cut-out portion 160 at the location where the first portion 132 of the support element 130 is positioned. The first portion 132 of the support element 130 is shaped to at least partly cover the cut-out portion 160 when mounted.

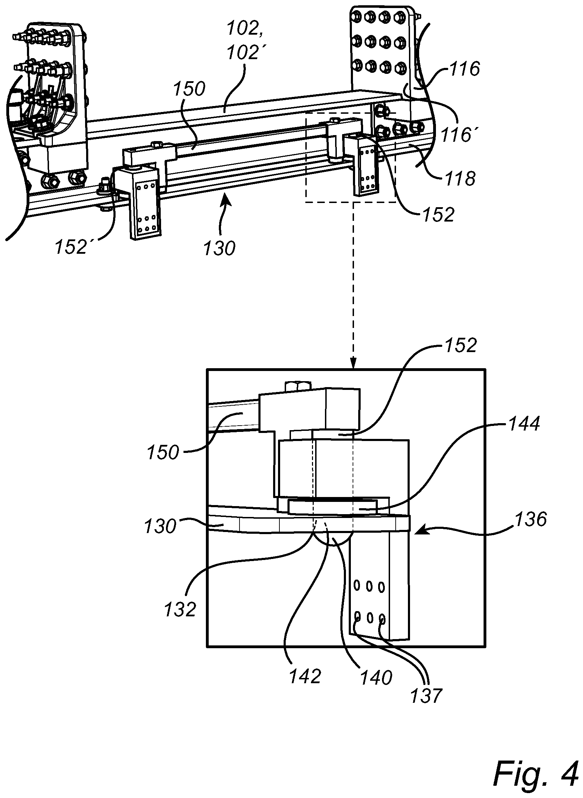

Referring back to the frame bracket 116. As can be seen in Fig. 4, each frame bracket 116 preferably comprises a reversed U-shape portion 116' that at least partly encloses the corresponding beam 102, 102'. A form-locking arrangement is hereby provided that enhances the connection between the frame bracket and the beam, especially under frontal collision loads.

Furthermore, and as can be seen in detail in Fig. 2, the exemplified battery suspension arrangement 100 further comprises a pair of additional battery brackets 170, each connected to a respective longitudinal end of the first traction battery 110. The additional battery brackets 170 are mounted to the first battery suspension portion 108 of the beams 102, 102'. The additional battery brackets 170 serve a similar function as the brackets 136, 136' described above.

Each additional battery bracket 170 comprises an additional elongated portion in a similar manner as the above described elongated portion 140 of the above described brackets 136, 136'. The elongated portion is received in an additional aperture 174 provided in the first battery suspension portion 108. Similar to the interface described above for the second traction battery 114, the difference in dimensions between the additional elongated portion and the aperture 174 allows for relative movement and flexibility during operation.

Also, the battery suspension arrangement 100 comprises an additional bar element 176 that extends between, and is connected to, the pair of additional battery brackets 170. A pair of additional elastic damper elements 178 is arranged between the additional bar element 176 and a respective one of the pair of additional battery brackets 170 to absorb shocks and vibrations acting on the first traction battery 110.

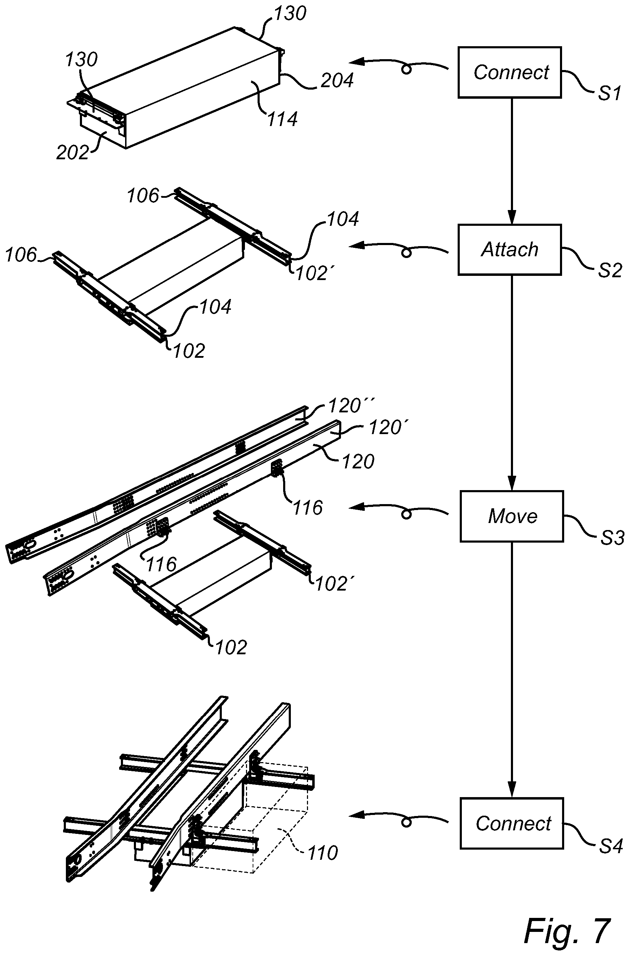

Reference is now made to Fig. 7, which schematically illustrates a method of assembling the first 110 and second 114 traction batteries to the frame 120 of the vehicle 10. In an initial condition, the pair of support elements 130 is connected S1 to respective longitudinal ends 202, 204 of the second traction battery 114. Hereby, the second traction battery 114 is prepared for mounting beneath the vehicle frame 120. The connection of the pair of support elements 130 to the second traction battery 114 may be realized by mounting the support elements to pre-installed battery brackets, as described above.

Subsequently, the pair of support elements 130 is attached S2 to a respective one of a pair of beams 102, 102'. The attachment of the pair of support elements 130 to the respective one of a pair of beams 102, 102' may be achieved by using releasable fasteners such as bolts or screws. At this point, the second traction battery 114 is structurally integrated with the beams.

The pair of beams 102, 102' -along with the second traction battery 114 suspended therefrom-is moved S3 vertically relative to the frame 120 of the vehicle 10. Subsequently, the beams are secured to a respective one of a pair of frame brackets 116, which are attached to the frame 120 of the vehicle. Hence, the pair of frame brackets 116 may be pre-installed on the frame 120. The second traction battery 114 is hereby suspended from the frame in a position below the longitudinal frame rails 120', 120".

Finally, the first traction battery 110 is connected S4 to the pair of beams 102, 102' on a side opposite to the frame brackets 116, relative to the position of the second traction battery 114. The first traction battery 110 is preferably mounted to the first battery suspension portion 108 of the beams, as described above.

### EXAMPLE LIST

Example 1. A battery suspension arrangement (100) for a traction battery arrangement of a vehicle, the battery suspension arrangement comprising: a pair of beams (102, 102') arranged at a distance from each other, each of the beams extending from a first end (104) to a second end (106) the pair of beams each comprising a first battery suspension portion (108) configured to suspend a first traction battery (110), and a second battery suspension portion (112) configured to suspend a second traction battery (114), the second battery suspension portion being positioned vertically lower than the first battery suspension portion, a pair of frame brackets (116) configured to connect the pair of beams to a frame (120) of the vehicle, wherein each one of the frame brackets is connected to a respective one of the pair of beams at a frame connecting position (118) arranged between the first and second ends, wherein the first battery suspension portion (108) is arranged between the first end and the frame connecting position, and the second battery suspension portion is arranged between the second end and the frame connecting position, and a pair of support elements (130), each one of the support elements comprising a first portion (132) to which the second traction battery is configured to be connected, and a second portion (134) detachably fastened to the second battery suspension portion of the respective beam to enable removal of the second traction battery.

Example 2. The battery suspension arrangement of example 1, further comprising a battery bracket (136) configured to be connected to the second traction battery, wherein the battery bracket is connected to the first portion of the support element.

Example 3. The battery suspension arrangement of example 2, wherein the battery bracket comprises an elongated portion (140), and the first portion (132) of the support element (130) comprises an aperture (142), wherein the elongated portion is positioned within the aperture.

Example 4. The battery suspension arrangement of example 3, wherein a cross-sectional dimension of the elongated portion is smaller than a cross-sectional dimension of the aperture, thereby allowing relative movement between the battery bracket and the support element.

Example 5. The battery suspension arrangement of any one of examples 2 - 4, further comprising an suspension element (144) arranged between the battery bracket and the first portion of the support element.

Example 6. The battery suspension arrangement of any one of examples 2 - 5, wherein the battery bracket (136) is a first battery bracket, the battery suspension arrangement further comprising a second battery bracket (136') arranged at a distance from the first battery bracket toward the second end (106) of the beams, the second battery bracket being configured to be connected to the second traction battery, wherein the second battery bracket is connected to an additional first portion (132') of the support element.

Example 7. The battery suspension arrangement of example 6, further comprising a bar element (150) extending between and connected to the first and second battery brackets.

Example 8. The battery suspension arrangement of example 7, further comprising a pair of elastic damper elements (152, 152') arranged between the bar element and a respective one of the first and second battery brackets.

Example 9. The battery suspension arrangement of any one of the preceding examples, further comprising a plurality of releasable fasteners (154) detachably fastening the second portion of the support element to the second battery suspension portion.

Example 10. The battery suspension arrangement of example 9, wherein the plurality of releasable fasteners comprise at least one screw or bolt.

Example 11. The battery suspension arrangement of any one of the preceding examples, wherein each of the pair of beams comprises a cut-out portion (160), the first portion of the support element being positioned to at least partly cover the cut-out portion.

Example 12. The battery suspension arrangement of any one of the preceding examples, wherein each of the frame brackets (116) comprises a reversed U-shape portion that at least partly enclose the respective beam.

Example 13. The battery suspension arrangement of any one of the preceding examples, further comprising a pair of additional battery brackets (170) configured to be connected to the first traction battery (110), wherein the additional battery brackets (170) are connected to the first battery suspension portion (108).

Example 14. The battery suspension arrangement of example 13, wherein each additional battery bracket comprises an additional elongated portion and the first battery suspension portion (108) comprises an additional aperture (174), the additional elongated portion is positioned within the additional aperture.

Example 15. The battery suspension arrangement of example 14, wherein a cross-sectional dimension of the additional elongated portion is smaller than a cross-sectional dimension of the additional aperture, thereby allowing relative movement between the additional battery bracket and the first battery suspension portion.

Example 16. The battery suspension arrangement of any one of examples 13 - 15, further comprising an additional bar element (176) extending between and connected to the pair of additional battery brackets (170).

Example 17. The battery suspension arrangement of example 16, further comprising a pair of additional elastic damper elements (178) arranged between the additional bar element (176) and a respective one of the pair of additional battery brackets (170).

Example 18. The battery suspension arrangement of any one of the preceding examples, wherein at least one of the pair of beams has an I-shaped cross-section.

Example 19. A vehicle comprising the battery suspension arrangement according to any of the preceding examples.

Example 20. A method of assembling a first and a second traction battery to a frame of a vehicle, the method comprising: connecting a pair of support elements to respective longitudinal ends of a second traction battery, attaching the pair of support elements to a respective one of a pair of beams, each beam extending from a first end to a second end, moving the pair of beams vertically and subsequently securing the beams to a respective one of a pair of frame brackets attached to the frame of the vehicle, thereby suspending the second traction battery from the frame of the vehicle, and connecting a first traction battery to the pair of beams on a side opposite to the frame brackets relative to the position of the second traction battery.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery suspension arrangement (100) for a traction battery arrangement (50) of a vehicle, the battery suspension arrangement comprising:
- a pair of beams (102, 102') arranged at a distance from each other, each of the beams extending from a first end (104) to a second end (106), the pair of beams each comprising a first battery suspension portion (108) configured to suspend a first traction battery (110), and a second battery suspension portion (112) configured to suspend a second traction battery (114), the second battery suspension portion being positioned vertically lower than the first battery suspension portion,
- a pair of frame brackets (116) configured to connect the pair of beams to a frame (120) of the vehicle, wherein each one of the frame brackets is connected to a respective one of the pair of beams at a frame connecting position (118) arranged between the first and second ends, wherein the first battery suspension portion (108) is arranged between the first end and the frame connecting position (118), and the second battery suspension portion (112) is arranged between the second end (106) and the frame connecting position (118), and
- a pair of support elements (130), each one of the support elements comprising a first portion (132) to which the second traction battery is configured to be connected, and a second portion (134) detachably fastened to the second battery suspension portion of the respective beam to enable removal of the second traction battery.

2. The battery suspension arrangement (100) of claim 1, further comprising a battery bracket (136) configured to be connected to the second traction battery, wherein the battery bracket is connected to the first portion (132) of the support element (130).

3. The battery suspension arrangement (100) of claim 2, wherein the battery bracket (136) comprises an elongated portion (140), and the first portion (132) of the support element (130) comprises an aperture (142), wherein the elongated portion is positioned within the aperture.

4. The battery suspension arrangement (100) of claim 3, wherein a cross-sectional dimension of the elongated portion (140) is smaller than a cross-sectional dimension of the aperture (142), thereby allowing relative movement between the battery bracket and the support element.

5. The battery suspension arrangement (100) of any one of claims 2 - 4, further comprising an suspension element (144) arranged between the battery bracket (136) and the first portion (132) of the support element (130).

6. The battery suspension arrangement (100) of any one of claims 2 - 5, wherein the battery bracket (136) is a first battery bracket, the battery suspension arrangement further comprising a second battery bracket (136') arranged at a distance from the first battery bracket toward the second end (106) of the beams, the second battery bracket being configured to be connected to the second traction battery (114), wherein the second battery bracket is connected to an additional first portion (132') of the support element.

7. The battery suspension arrangement (100) of claim 6, further comprising a bar element (150) extending between and connected to the first and second battery brackets.

8. The battery suspension arrangement (100) of claim 7, further comprising a pair of elastic damper elements (152, 152') arranged between the bar element (150) and a respective one of the first (136) and second (136') battery brackets.

9. The battery suspension arrangement (100) of any one of the preceding claims, further comprising a plurality of releasable fasteners (154) detachably fastening the second portion (134) of the support element (130) to the second battery suspension portion (112).

10. The battery suspension arrangement (100) of claim 9, wherein the plurality of releasable fasteners (154) comprise at least one screw or bolt.

11. The battery suspension arrangement (100) of any one of the preceding claims, wherein each of the pair of beams (102, 102') comprises a cut-out portion (160), the first portion of the support element being positioned to at least partly cover the cut-out portion.

12. The battery suspension arrangement (100) of any one of the preceding claims, wherein each of the frame brackets (116) comprises a reversed U-shape portion (116') that at least partly enclose the respective beam (102, 102').

13. The battery suspension arrangement (100) of any one of the preceding claims, further comprising a pair of additional battery brackets (170) configured to be connected to the first traction battery (110), wherein the additional battery brackets (170) are connected to the first battery suspension portion (108).

14. A vehicle (10) comprising the battery suspension arrangement (100) according to any of the preceding claims.

15. A method of assembling a first and a second traction battery to a frame of a vehicle, the method comprising:
- connecting (S1) a pair of support elements (130) to respective longitudinal ends (202, 204) of a second traction battery (114),
- attaching (S2) the pair of support elements (130) to a respective one of a pair of beams (102, 102'), each beam extending from a first end (104) to a second end (106),
- moving (S3) the pair of beams (102, 102') vertically and subsequently securing the beams (102, 102') to a respective one of a pair of frame brackets (116) attached to the frame (120) of the vehicle (10), thereby suspending the second traction battery (114) from the frame (120) of the vehicle (10), and
- connecting (S4) a first traction battery to the pair of beams on a side opposite to the frame brackets relative to the position of the second traction battery.
